# EUROPEAN PATENT APPLICATION

(11) **EP 4 170 993 A1**
(43) Date of publication of application: **26.04.2023**
(21) Application number: 21382942.7
(22) Date of filing: 19.10.2021
(51) Int. Cl.: H04L 65/1073, H04W 4/02, H04W 8/02, H04W 64/00

(54) **METHOD FOR REGISTERING A USER EQUIPMENT IN A COMMUNICATIONS NETWORK**

(71) Applicant: Satelio Iot, S.L., 08008 Barcelona (ES)
(72) Inventor: Ferrús Ferré, Ramon, 08015 Barcelona (ES); Guadalupi, Marco, 08018 Barcelona (ES); Sanpera Izoard Jaume, 08014 Barcelona (ES)
(74) Representative: Isern Patentes y Marcas S.L.

(57) **Abstract**

The present invention is aimed at a method for registering a user equipment in a cellular communications network, and more specifically, in a satellite cellular communications network, which enables a user equipment to be registered in the network and a tracking area to be established, customised for each user equipment depending on the position and mobility features of the user equipment. Additionally, the invention provides a method for updating the tracking area of a moving user equipment when the user equipment moves outside the limits of a previously established tracking area.

## Description

### Technical field of the invention

The present invention is directed to a method for registering a user equipment in a cellular communications network, and more specifically, in a satellite cellular communications network, which enables a user equipment to be registered in the network and a tracking area to be established, customised for each user equipment depending on the position and mobility features of the user equipment. Additionally, the invention provides a method for updating the tracking area of a moving user equipment when the user equipment moves outside the limits of a previously established tracking area.

### Background of the invention

Cellular communications networks for communicating, by means of radio frequency, a set of terminals with each other and with other networks, such as the public telephone network and the Internet, are known. In these networks, the service area of the network is fragmented into geographic regions, called cells, managed through multiple nodes or base stations distributed in a territory and which, in aggregate, make up the global coverage of the network; normally, in cellular networks, location areas or tracking areas are defined which enable the network to know through which cell or set of cells the user equipment can be alerted to be able to initiate, from the network, the establishment of communication channels, a process known as search or paging. Mobile telephone networks are a significant example of a cellular communications network.

In current mobile telephone networks, including terrestrial NB-loT networks for providing services generically known as "Internet of things" (IoT) services, the definition of the tracking area is directly linked to the cell coverage areas. In particular, a tracking area is defined based on a grouping of one or more cells, to which an identifier (tracking area code, TAC) is assigned. Said identifier is broadcast through the control channels of each of the cells belonging to the grouping so that a user equipment, after receiving said identifier, can know in which tracking area it is located. It should be noted that each cell in the network only belongs to one tracking area and therefore only broadcasts one TAC.

When a user equipment connects to the network to carry out any communication, the network establishes an association, which is normally stored in a database, between the user equipment and the tracking area to which the cell, by means of which the user equipment has been connected, belongs. Subsequently, when communication with the network ceases and the user equipment disconnects from the cell, the network allows the user equipment to move through the coverage area of the network and change cells without needing to inform the network of said cell change, provided that the new cell belongs to the same tracking area that was established in the last association. In this manner, while the user equipment remains disconnected, if the network had the need to start the "search" (paging) of the user equipment, this search would be done by sending signalling through all the cells that belong to the tracking area.

Furthermore, if the user equipment moves to a cell belonging to a different tracking area, the user equipment has to access the network so that it updates the association of the user equipment with the new tracking area (this method is called tracking area update). Therefore, the size of a tracking area is a compromise between the signalling volume dedicated to the search (paging) of user equipment (the larger the tracking area, the greater it is since the search must be carried out through a large number of cells) and the tracking area update signalling volume (the smaller the tracking area, the greater it is since the probability that the terminal changes tracking area is greater). It should also be noted that the network can associate a user equipment with multiple tracking areas simultaneously in order to reduce the tracking area update signalling in cases wherein the user equipment moves successively between two neighbouring cells belonging to different tracking areas.

However, although the current approach has proven to be valid for conventional terrestrial networks, it is insufficient to manage non-terrestrial cellular networks (NTN), and particularly cellular networks via satellite. In this type of networks, the cells can extend over hundreds of kilometres, and in the case of non-geostationary satellites, they have the added drawback that the cells are not previously fixed to a specific geographical area but rather move continuously over the Earth due to the very orbital motion of the satellites.

As a whole, said features cause the definition and management of tracking areas as carried out in terrestrial cellular networks to be not efficient in NTN cellular networks, which is why there is a need for a method that enables overcoming the previous problems that still exist in this field of the art.

### Description of the invention

The present invention proposes a solution to the above problems by means of a method for registering in a communications network and a method for updating a tracking area as defined below.

In a first inventive aspect, the invention provides *a method for registering a user equipment (UE) in a cellular communications network (NW), wherein the user equipment (UE) comprises positioning means configured to determine the real-time position of the user equipment (UE);*
*wherein the method comprises the steps of:*
*sending, by the user equipment (UE), a request for registering the user equipment (UE) to the communications network (NW),*
*determining, by the user equipment (UE), the real-time position of the user equipment (UE),*
*sending, by the user equipment (UE), the real-time position of the user equipment (UE) to the communications network (NW),*
*establishing, by the communications network (NW), a tracking area (TA) of the user equipment (UE) from the real-time position of the user equipment (UE),*
*sending, by the communications network (NW), a registration response to the user equipment (UE).*

Throughout the present document, it will be understood that communications network, or network, is a cellular communications network, and preferably it is a cellular network for loT services with access via satellite; preferably, the communications network comprises a set of nodes or base stations embedded in the satellites and configured to communicate one or more user equipment units with the aforementioned nodes, between the user equipment units, and possibly with other networks, such as, for example, with the Internet or private networks from loT service providers. The method enables establishing the tracking area of a user equipment, or terminal, in the communications network based on the position of said terminal, the tracking area being preferably centred on the position of the terminal at the time of registration in the network. For this, each user equipment comprises means for establishing the real-time position thereof, which in a preferred embodiment are satellite positioning devices, such as the Galileo or GPS system.

To start the process for establishing a tracking area, the user terminal transmits a registration request to the network, which may have the format corresponding to a registration request according to a conventional protocol or method. Next, the terminal determines the real-time position thereof by means of the positioning means; in some embodiments, the user equipment may store in a volatile or non-volatile memory of the terminal the coordinates of the real-time position of the user equipment.

The terminal then transmits the real-time position to the network, and the network establishes, or defines, a tracking area, specific for that user equipment; the definition of the tracking area is not determined by the coverage of the cell or group of cells through which the terminal accesses (as occurs in terrestrial networks) but can depend on a plurality of variables, such as the type of service, the type of user equipment, pre-known traffic and mobility behaviour patterns of the service and/or user equipment, network load, etc., but at least it will be based on the real-time position of the user equipment; in a preferred embodiment, the geometric centre of the tracking area coincides with the real-time position of the terminal. Preferably, the network defines a unique and customised tracking area for each user equipment registered in the network. Each tracking area is defined by means of a geographical area specification, which preferably comprises parameters such as the real-time position of the user equipment, the geometric shape of the tracking area and/or the dimensions thereof; also preferably, the tracking area specification is stored in a network database.

According to the method, the communications network transmits to the corresponding user equipment a registration response, which contains the response of the network to the request for registering the user equipment. The registration response can be an acceptance of the registration request, so that the registration of the user equipment in the network becomes effective, or it can be a rejection of the registration request, so that the terminal is not registered, and the corresponding tracking area specification is removed from the network databases. The criterion for the acceptance or rejection of the registration request responds to conventional criteria in cellular networks.

The method enables establishing a tracking area for a user equipment registered on the network based on the position of the user equipment, which advantageously enables the network to precisely track the user equipment for search (paging) processes, particularly in communications networks with large size cells and moving over the earth's surface, such as networks with communication satellites.

In a particular embodiment, *when the registration response of the communications network (NW) contains the acceptance of the registration of the user equipment (UE), the method further comprises the step of sending, by the communications network (NW), a tracking area (TA) specification to the user equipment (UE).*

Advantageously, when the network accepts the request for registering the terminal, the network sends a registration response with the acceptance of the registration and the tracking area specification, which preferably includes the position, the geometric shape of the tracking area and/or the dimensions thereof.

In a particular embodiment, *the positioning means are further configured to determine the real-time speed of the user equipment (UE), and wherein the method further comprises the steps of:*
*determining, by the user equipment (UE), the real-time speed of the user equipment (UE),*
*sending, by the user equipment (UE), the real-time speed of the user equipment (UE) to the communications network (NW),*
*adjusting, by the communications network (NW), the tracking area (TA) of the user equipment (UE) based on the real-time speed of the user equipment (UE).*

Preferably, the positioning means, in addition to the position, can determine the speed of the terminal, for example, from the difference between two position measurements separated in time; when the terminal is not mobile or the position thereof is static, the real-time speed is zero, and the registration process is identical to the previous steps; on the contrary, if the user equipment is mobile, the positioning means can establish the real-time speed thereof which is transmitted to the communications network to adjust the parameters of the tracking area.

In a particular embodiment, *the tracking area (TA) of the user equipment (UE) is configured as a geometric figure, or it is configured by means of a set of geographic coordinates.*

In a particular embodiment, the tracking area (TA) has a circular configuration with radius R.

The tracking area can be defined in various ways, for example, by parameterising a geometric figure, such as a polygon, or a circle, or by means of a set of geographic coordinates that define vertexes of a tracking area configured as a regular or irregular polygon.

A preferred form of the tracking area is a circle, which is defined based on two parameters, the radius R and the position of the centre of the circle, which in a preferred embodiment coincides with the real-time position of the user equipment. In another embodiment, the tracking area has the configuration of a parameterisable regular geometric figure or polygon, such as an ellipse, a hexagon or a square. In another embodiment, the tracking area has an irregular polygon configuration defined from the geographic coordinates of the vertexes thereof.

In a particular embodiment, the size of the tracking area (TA) of the user equipment (UE) is directly proportional to the real-time speed of the user equipment (UE). Adjusting the tracking area comprises, in a preferred embodiment, increasing the size of the tracking area proportionally the real-time speed of the user equipment. Advantageously, the adjustment of the tracking area based on speed enables increasing the efficiency of the tracking of the user equipment since, at a higher speed, the size of the tracking area is increased with the consequent reduction in the signalling volume associated with the method for updating the tracking area. Moreover, at a slower speed, the size of the tracking area is reduced with the consequent reduction in the signalling volume associated with the method for searching (paging) the user equipment.

In a particular embodiment, when the real-time speed of the user equipment (UE) is zero, the size of the tracking area (TA) of the user equipment (UE) is very small or zero. When the terminal is static, and the real-time speed thereof is zero, the network can track the user equipment more easily than when it moves at great speed, so the tracking area can have very small dimensions or be reduced to a point (for example R=0 in circular tracking areas).

In a particular embodiment, *the communications network (NW) comprises at least one non-geostationary satellite.*

In a preferred embodiment, the communications network comprises a constellation of satellites orbiting the earth. Advantageously, the communications network uses the satellites as communication nodes or base stations, so that the network covers any portion of the earth with a small number of nodes.

In a particular embodiment, *the communications network (NW) is a network according to the 3GPP NB-IoT NTN standard.*

Advantageously, 3GPP NB-IoT NTN networks offer connectivity to devices with "Internet of things" (IoT) in non-terrestrial networks, for example, in networks with satellites.

In a second inventive aspect, the invention provides a *method for registering a user equipment (UE) in a cellular communications network (NW), wherein the user equipment (UE) comprises positioning means configured to determine the real-time position of the user equipment (UE); wherein the method comprises, by the user equipment (UE), the steps of:*
*sending a request for registering the user equipment (UE),*
*determining the real-time position of the user equipment (UE),*
*sending the real-time position of the user equipment (UE),*
*receiving a registration response to the user equipment (UE),*
*receiving a tracking area (TA) specification established by the communications network (NW) from the real-time position of the user equipment (UE).*

In a particular embodiment, *the method further comprises the steps of:*
*determining the real-time speed of the user equipment (UE),*
*sending the real-time speed of the user equipment (UE),*
*receiving an adjusted tracking area (TA) specification based on the real-time speed of the user equipment (UE).*

In a third inventive aspect, the invention provides a *method for registering a user equipment (UE) in a cellular communications network (NW), wherein the user equipment (UE) comprises positioning means configured to determine the real-time position of the user equipment (UE); wherein the method comprises, by the communications network (NW), the steps of:*
*receiving a request for registering the user equipment (UE),*
*receiving a real-time position of the user equipment (UE),*
*establishing a tracking area (TA) of the user equipment (UE) from the real-time position of the user equipment (UE),*
*sending a registration response to the user equipment,*
*sending a tracking area (TA) specification.*

In a particular embodiment, *the method further comprises the steps of:*
*receiving the real-time speed of the user equipment (UE),*
*adjusting the tracking area (TA) of the user equipment (UE) based on the real-time speed of the user equipment (UE)*
*sending an adjusted tracking area (TA) specification based on the real-time* *speed of the user equipment (UE).*

In a fourth inventive aspect, the invention provides a *method for updating the tracking area (TA) of a user equipment (UE) registered in a cellular communications network (NW) with a method according to any of the preceding claims, wherein, when the user equipment (UE) determines that an updated real-time position of the user equipment (UE) is outside the tracking area (TA) of the user equipment (UE) previously established by the communications network (NW), the method comprises the steps of:*
*sending, by the user equipment (UE), a request for updating the tracking area to the communications network (NW),*
*sending, by the user equipment (UE), the updated real-time position of the user equipment (UE) to the communications network (NW),*
*establishing, by the communications network (NW), an updated tracking area (UTA) from the updated real-time position of the user equipment (UE),*
*sending, by the communications network (NW), a tracking area update response.*

Once the user equipment is registered in the communications network, the tracking area must be updated when the user equipment moves outside the limits of the tracking area defined during the registration process. According to the method for updating the tracking area, when the user equipment obtains an updated real-time position and determines that the updated real-time position thereof is outside the limits of the tracking area previously established by the network, either during registration or subsequently during a previous tracking area update, the user equipment sends a tracking area update request to the network, together with the updated real-time position. The communications network then establishes an updated tracking area from the information of the updated real-time position, and sends an update response to the user equipment. In this way, the efficiency of the update area is maintained over time, regardless of the movement of the terminal.

In a particular embodiment, *when the tracking area update response contains the acceptance of the tracking area update, the method comprises the step of sending, by the communications network (NW), an updated tracking area (UTA) specification to the user equipment (UE).*

Advantageously, when the network accepts the request for updating the terminal, the network sends a registration response with the registration update and the updated tracking area specification, which preferably includes the updated position of the tracking area and/or the updated dimensions thereof.

In a particular embodiment, *the positioning means are further configured to determine the real-time speed of the user equipment (UE), and wherein the method comprises the steps of:*
*determining, by the user equipment (UE), the updated real-time speed of the user equipment (UE),*
*sending, by the user equipment (UE), the updated real-time speed of the user equipment (UE) to the communications network (NW),*
*adjusting, by the communications network (NW), the updated tracking area (UTA) of the user equipment (UE) from the updated real-time speed of the user equipment (UE).*

As with the updated real-time position, the real-time speed of the terminal can vary substantially with respect to the establishment of the previous tracking area, therefore when the positioning means detect a change in the real-time speed, the user equipment also sends this parameter to the communications network so that the tracking area specification is adjusted accordingly. Preferably, the dimensions of the tracking area increase when the terminal has a greater speed, and vice versa.

In a fifth inventive aspect, the invention provides a *method for updating the tracking area (TA) of a user equipment (UE) registered in a cellular communications network (NW) with a method according to the second inventive aspect, wherein, when the user equipment (UE) determines that an updated real-time position of the user equipment (UE) is outside the tracking area (TA) of the user equipment (UE) established by the communications network (NW), the method comprises, by the user equipment (UE), the steps of:*
*sending (201) a request to update the tracking area,*
*sending (202) the updated real-time position of the user equipment (UE),*
*receiving a tracking area update response,*
*receiving an updated tracking area (UTA) specification established from the updated real-time position of the user equipment (UE).*

In a sixth inventive aspect, the invention provides a *method for updating the tracking area (TA) of a user equipment (UE) registered in a cellular communications network (NW) with a method according to the third inventive aspect, wherein, when the user equipment (UE) determines that an updated real-time position of the user equipment (UE) is outside the tracking area (TA) of the user equipment (UE) established by the communications network (NW), the method comprises, by the communications network (NW), the steps of:*
*receiving a request to update the tracking area,*
*receiving the updated real-time position of the user equipment (UE),*
*establishing (203) an updated tracking area (UTA) from the updated real-time position of the user equipment (UE),*
*sending (204) a tracking area update response,*
*sending an updated tracking area (UTA) specification established from the updated real-time position of the user equipment (UE).*

These and other features and advantages of the invention will be apparent from the description of the preferred, but not exclusive, embodiments, which are illustrated by way of non-limiting example in the accompanying drawings.

### Brief description of the drawings

- Figures 1a, 1b: show a schematic view of a network, a user equipment and a tracking area and an updated tracking area, respectively.
- Figures 2a, 2b, 2c, 2d: show the flow charts for the main embodiments of the registration methods and update methods.

### Detailed description of an exemplary embodiment

Numerous specific details are set forth in the following detailed description in the form of examples to provide a thorough understanding of the relevant teachings. However, it will be apparent to those skilled in the art that the present teachings can be practiced without such details.

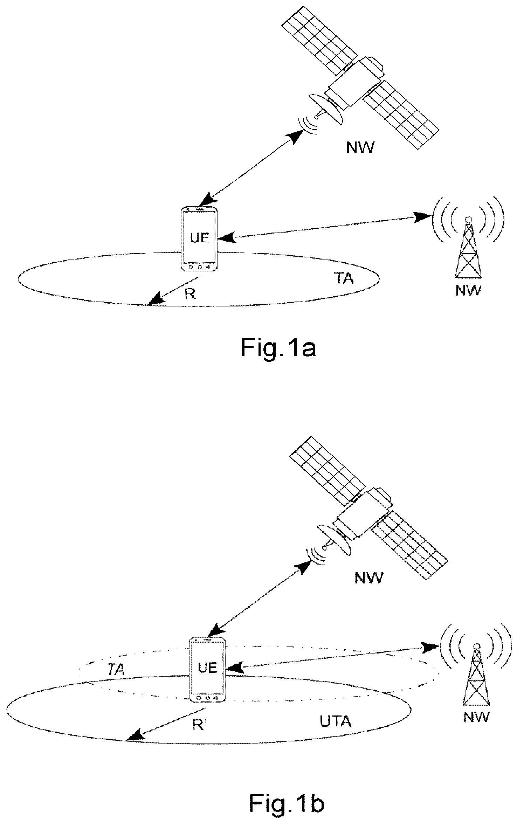

Figure 1a shows a schematic view of the elements that execute the methods of the present invention; this figure shows a user equipment (UE) in data communication with a communications network (NW) which is represented by means of a satellite and a ground base station. In a preferred embodiment, the user equipment (UE) is a mobile device with a satellite positioning module, and the communications network (NW) is a 3GPP NB-IoT NTN non-terrestrial cellular network with a plurality of nodes comprising satellites.

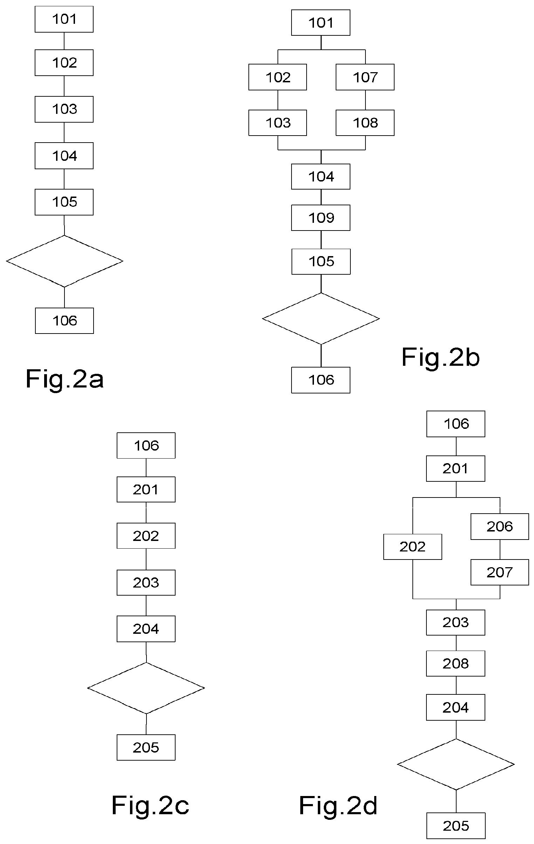

In a preferred example, the user equipment (UE) requests the registration in the communications network (NW) by sending (101) a registration request, and initiates the process shown in the flow diagram of Figure 2a; the user equipment (UE) also determines (102) the real-time position thereof and sends it (103) to the network (NW); then the communications network (NW) establishes (104) from the real-time position of the user equipment (UE) a tracking area (TA) for said user equipment (UE). In the example shown, the tracking area (TA) is a circle of radius R centred on the real-time position of the user equipment (UE); the network (NW) stores the tracking area (TA) specification in a database and continues with the registration of the user equipment (UE) according to a conventional method. Finally, the network (NW) sends (105) a registration response to the user equipment (UE); this response contains an acceptance or a rejection of the request for registration of the user equipment (UE), depending on whether the requirements for the registration of the user equipment (UE) according to known methods are fulfilled.

When the registration response contains an acceptance of the registration request, the network (NW) further sends (106) the tracking area (TA) specification, which comprises at least the position of the centre of the tracking area (TA) and the value of its radius R.

Figure 2b shows the registration process when the positioning means of the user equipment (UE) are configured to determine (107) the real-time speed of the user equipment (UE). In this process, the user equipment (UE) sends (108) the real-time speed thereof to the communications network (NW), so that after establishing (104) the tracking area (TA), the network (NW) adjusts (109) the parameters of the tracking area (TA) according to the real-time speed of the user equipment (UE); in this example, the radius R of the tracking area (TA) increases proportionally to the real-time speed of the user equipment (UE) according to the expression: R = R₀ + k·Vᵣₑₐₗ₋ₜᵢₘₑ

The invention also provides a method for updating the tracking area (TA) when the user equipment (UE) has already been registered in the communications network (NW). This process is represented in the flow diagram of Figure 2c, wherein, once the registration of the user equipment (UE) has been completed by sending (106) the tracking area (TA) specification to the user equipment (UE), and when the user equipment (UE) has determined that as a result of the movement thereof it has gone outside the limits of the tracking area (TA) defined during the registration process, the user equipment (UE) sends (201) a request for updating the tracking area to the network (NW), and also sends (202) the updated real-time position. The communications network (NW) then establishes (203) an updated tracking area (UTA) from the updated real-time position of the user equipment (UE), and sends (204) a tracking area update response.

In a similar manner to the registration response, the tracking area update response contains an acceptance or a rejection, and when the response contains an acceptance, the communications network (NW) sends (205) the updated tracking area (UTA) specification to the user equipment (UE) with the updated parameters.

A preferred embodiment of the method for updating the tracking area (TA) takes into consideration the updated real-time speed of the user equipment (UE). The process is shown in the flow diagram of Figure 2d, and comprises, after sending (106) the tracking area (TA) specification to the user equipment (UE) and sending (201) the update request, determining (206) the updated real-time speed of the user equipment (UE) and sending it (207) to the communications network (NW), which after establishing (203) the updated tracking area (UTA), adjusts it (208) based on the updated real-time speed of the user equipment (UE). Finally, the network (NW) sends (204) the tracking area update response to the user equipment (UE) and, if applicable, also sends (205) the updated tracking area (UTA) specification.

A diagram according to this example is shown in Figure 1b, with the updated tracking area (UTA) centred on the new position of the user equipment and defined by the radius R' and the previous tracking area (TA) shown as a dashed line.

## Claims

1. A method for registering a user equipment (UE) in a cellular communications network (NW), wherein the user equipment (UE) comprises positioning means configured to determine the real-time position of the user equipment (UE);
wherein the method comprises the steps of:
sending (101), by the user equipment (UE), a request for registering the user equipment (UE) to the communications network (NW),
determining (102), by the user equipment (UE), the real-time position of the user equipment (UE),
sending (103), by the user equipment (UE), the real-time position of the user equipment (UE) to the communications network (NW),
establishing (104), by the communications network (NW), a tracking area (TA) of the user equipment (UE) from the real-time position of the user equipment (UE),
sending (105), by the communications network (NW), a registration response to the user equipment (UE).

2. The registration method according to the preceding claim, wherein when the registration response from the communications network (NW) contains the acceptance of the registration of the user equipment (UE), the method further comprises the step of:
sending (106), by the communications network (NW), a tracking area (TA) specification to the user equipment (UE).

3. The registration method according to any of the preceding claims, wherein the positioning means are further configured to determine the real-time speed of the user equipment (UE), and wherein the method further comprises the steps of:
determining (107), by the user equipment (UE), the real-time speed of the user equipment (UE),
sending (108), the user equipment (UE), the real-time speed of the user equipment (UE) to the communications network (NW),
adjusting (109), the communications network (NW), the tracking area (TA) of the user equipment (UE) based on the real-time speed of the user equipment (UE).

4. The registration method according to any of the preceding claims, wherein the tracking area (TA) of the user equipment (UE) is configured as a geometric figure, or is configured by means of a set of geographic coordinates.

5. The registration method according to any of the preceding claims, wherein the communications network (NW) comprises at least one non-geostationary satellite.

6. The registration method according to any of the preceding claims, wherein the communications network (NW) is a network according to the 3GPP NB-IoT NTN standard.

7. A method for registering a user equipment (UE) in a cellular communications network (NW), wherein the user equipment (UE) comprises positioning means configured to determine the real-time position of the user equipment (UE); wherein the method comprises, by the user equipment (UE), the steps of:
sending (101) a request for registering the user equipment (UE),
determining (102) the real-time position of the user equipment (UE),
sending (103) the real-time position of the user equipment (UE),
receiving a registration response to the user equipment (UE),
receiving a tracking area (TA) specification established by the communications network (NW) from the real-time position of the user equipment (UE).

8. The registration method according to the preceding claim, wherein the method further comprises the steps of:
determining (107) the real-time speed of the user equipment (UE),
sending (108) the real-time speed of the user equipment (UE),
receiving an adjusted tracking area (TA) specification based on the real-time speed of the user equipment (UE).

9. A method for registering a user equipment (UE) in a cellular communications network (NW), wherein the user equipment (UE) comprises positioning means configured to determine the real-time position of the user equipment (UE); wherein the method comprises, by the communications network (NW), the steps of:
receiving a request for registering the user equipment (UE),
receiving a real-time position of the user equipment (UE),
establishing (104) a tracking area (TA) of the user equipment (UE) from the real-time position of the user equipment (UE),
sending (105) a registration response to the user equipment,
sending (106) a tracking area (TA) specification.

10. The registration method according to the preceding claim, wherein the method further comprises the steps of:
receiving the real-time speed of the user equipment (UE),
adjusting (109) the tracking area (TA) of the user equipment (UE) based on the real-time speed of the user equipment (UE),
sending an adjusted tracking area (TA) specification based on the real-time speed of the user equipment (UE).

11. A method for updating the tracking area (TA) of a user equipment (UE) registered in a cellular communications network (NW) with a method according to any of claims 2-6, wherein, when the user equipment (UE) determines that an updated real-time position of the user equipment (UE) is outside the tracking area (TA) of the user equipment (UE) previously established by the communications network (NW), the method comprises the steps of:
sending (201), by the user equipment (UE), a request for updating the tracking area to the communications network (NW),
sending (202), by the user equipment (UE), the updated real-time position of the user equipment (UE) to the communications network (NW),
establishing (203), by the communications network (NW), an updated tracking area (UTA) from the updated real-time position of the user equipment (UE),
sending (204), by the communications network (NW), a tracking area update response.

12. An updating method according to the preceding claim, wherein, when the tracking area update response contains the acceptance of the tracking area update, the method comprises the step of:
sending (205), by the communications network (NW), an updated tracking area (UTA) specification to the user equipment (UE).

13. The updating method according to any of claims 11-12, wherein the positioning means are further configured to determine the real-time speed of the user equipment (UE), and wherein the method comprises the steps of:
determining (206), by the user equipment (UE), the updated real-time speed of the user equipment (UE),
sending (207), by the user equipment (UE), the updated real-time speed of the user equipment (UE) to the communications network (NW),
adjusting (208), by the communications network (NW), the updated tracking area (UTA) of the user equipment (UE) from the updated real-time speed of the user equipment (UE).

14. A method for updating the tracking area (TA) of a user equipment (UE) registered in a cellular communications network (NW) with a method according to any of claims 7-8, wherein, when the user equipment (UE) determines that an updated real-time position of the user equipment (UE) is outside the tracking area (TA) of the user equipment (UE) established by the communications network (NW), the method comprises, by the user equipment (EU), the steps of:
sending (201) a request to update the tracking area,
sending (202) the updated real-time position of the user equipment (UE),
receiving a tracking area update response,
receiving an updated tracking area (UTA) specification established from the updated real-time position of the user equipment (UE).

15. A method for updating the tracking area (TA) of a user equipment (UE) registered in a cellular communications network (NW) with a method according to any of claims 9-10, wherein, when the user equipment (UE) determines that an updated real-time position of the user equipment (UE) is outside the tracking area (TA) of the user equipment (UE) established by the communications network (NW), the method comprises, by the communications network (NW), the steps of:
receiving a request to update the tracking area,
receiving the updated real-time position of the user equipment (UE),
establishing (203) an updated tracking area (UTA) from the updated real-time position of the user equipment (UE),
sending (204) a tracking area update response,
sending an updated tracking area (UTA) specification established from the updated real-time position of the user equipment (UE).
